# EUROPÄISCHE PATENTANMELDUNG

(11) **EP 1 571 420 A2**
(43) Veröffentlichungstag der Anmeldung: **07.09.2005**
(21) Anmeldenummer: 05100232.7
(22) Anmeldetag: 17.01.2005
(51) Int. Cl.: G01C 21/34

(54) **Verfahren zum zeitabhängigen Navigieren eines Kraftfahrzeugs**

(30) Priorität: 04.03.2004 DE 102004010508
(71) Anmelder: ROBERT BOSCH GMBH, 70442 Stuttgart (DE)
(72) Erfinder: Neukirchner, Ernst-Peter, 31139, Hildesheim (DE)

(57) **Zusammenfassung**

Um ein Verfahren zum zeitabhängigen Navigieren eines Kraftfahrzeugs mit einem Navigationssystem (100) zu schaffen, das Routen zu Zielen berechnet, die der Nutzer des Kraftfahrzeuges vorgeben kann, wobei zeitabhängige Einflussgrößen, die die Befahrbarkeit der Route betreffen, berücksichtigt werden, wird vorgeschlagen, dass zu Positionen entlang der Route Zeiten oder Zeiträume gespeichert werden, zu denen das Fahrzeug diese Position passieren muss, um den Zeitabhängigkeiten zu entsprechen und dass während der Fahrt Überprüfungen erfolgen, ob die gespeicherten Zeiten bzw. Zeiträume eingehalten werden.

## Beschreibung

### Technisches Gebiet

Die Erfindung betrifft ein Verfahren zum Navigieren eines Kraftfahrzeugs mit einem Navigationssystem, wobei das Navigationssystem einem Nutzer des Kraftfahrzeugs eine Fahrtroute vorschlägt und ein Vergleich des Zeitpunktes an der aktuellen Position mit einer postulierten Zeit oder einem postulierten Zeitraum an dieser Position erfolgt und bei einer einen Grenzwert übersteigenden zeitlichen Abweichung ein Hinweis ausgegeben wird oder eine Neuberechnung der Route veranlasst wird, mit dem Ziel eine Alternativroute zu finden, sowie ein entsprechend ausgelegtes Navigationssystem.

### Stand der Technik

Navigationssysteme finden vor allem bei Kraftfahrzeugen eine immer größere Verbreitung, um einen Nutzer des Kraftfahrzeugs von einem Ausgangspunkt zu einem Zielort beispielsweise einer bestimmten Adresse in einer dem Nutzer fremden Stadt zu leiten. Der gewünschte Zielort ist vom Nutzer in einer Eingabeeinheit des Navigationssystems eingebbar und das Navigationssystem ermittelt in einer Routenberechnungseinheit den einzuschlagenden Weg vom Ausgangspunkt, der üblicherweise die momentane Position des Kraftfahrzeugs ist, zum Zielort. Hierfiir sind in einem Datenspeicher des Navigationssystems sämtliche Straßen und Verkehrsverbindungen des jeweiligen Fahrtgebiets abgespeichert. Der Datenspeicher kann eine auswechselbare CD-Rom oder DVD sein, um beispielsweise für verschiedene Länder jeweils getrennte Datenspeicher zur Verfiigung zu stellen. Der Datenspeicher kann aber auch eine Harddisc oder eine andere nichtflüchtige Speichereinrichtung sein. Es sind Navigationssysteme bekannt, bei denen der Nutzer weitere Einflussgrößen wie beispielsweise die voraussichtliche Fahrweise oder bestimmte Arten von Straßen wie Autobahnen, die nicht verwendet werden sollen, in das Navigationssystem eingeben kann, um von der Routenberechnungseinheit eine seinen Wünschen entsprechende Route berechnen zu lassen.

Um den Nutzer des Navigationssystems in der vorgeschlagenen Richtung zu leiten verfügt es über eine optische und/oder akustische Ausgabeeinheit. Beispielsweise kann die einzuschlagende Richtung mit Pfeilen an einem Display angezeigt werden oder durch Ausgabe einer Sprachmitteilung. Weicht der Nutzer von der vom Navigationssystem vorgeschlagenen Fahrtroute ab kann er mit entsprechenden Mitteilungen darauf aufmerksam gemacht werden. Falls er nicht zu der vorgeschlagenen Fahrtroute zurückkehrt kann nach Überschreitung eines Grenzwerts für die Abweichung eine alternative Fahrtroute von der aktuellen Position zum gewünschten Zielort ermittelt werden. Es sind Navigationssysteme bekannt, die aktuelle Änderungen von Verkehrsverhältnissen auf der berechneten Route, die beispielsweise mit Verkehrsfunkmeldungen drahtlos übermittelt werden, bei der Ermittlung einer alternativen Fahrtroute mit einbeziehen können. Wird beispielsweise gemeldet, dass auf einer zu befahrenden Autobahn ein Verkehrsstau entstanden ist wird von dem Navigationssystem eine neue Route ermittelt, um diesen Stau zu umfahren.

Weiterhin können in dem Datenspeicher zeitabhängige Informationen wie Durchfahrts- oder Abbiegeverbote auf bestimmten Streckenabschnitten oder Öffnungszeiten von Brücken über einen Wasserweg gespeichert sein, die vom Nutzer manuell abrufbar sind.

Die US 6,317,685 beschreibt ein Navigationssystem bei dem die tatsächlich verstrichene Fahrtzeit auf der vom Navigationssystem vorgeschlagenen Route mit einer beispielsweise durchschnittlichen Fahrtgeschwindigkeit für diese Route verglichen wird. Weicht aufgrund großen Verkehrsaufkommens, das lediglich eine geringe Durchschnittsgeschwindigkeit zulässt, die aktuelle Position zu weit von der zu diesem Zeitpunkt postulierten Position ab wird von dem Navigationssystem eine alternative Fahrtroute ermittelt und dem Nutzer mitgeteilt.

Als nachteilig hierbei ist anzusehen, dass beispielsweise aufgrund erhöhten Verkehrsaufkommens, das nur eine geringe Durchschnittsgeschwindigkeit zulässt, ein später zu befahrender Streckenabschnitt, für den eine zeitabhängige Durchfahrtssperre wie z. B. ein Nachtfahrverbot besteht, nicht mehr genutzt werden kann, so dass Verzögerungen beim Erreichen des angestrebten Ziels auftreten können. Dies kann von bekannten Navigationssystemen bei der Ermittlung einer alternativen Fahrtroute nicht berücksichtigt werden.

Ausgehend von diesem Stand der Technik liegt der Erfindung die Aufgabe zugrunde, ein Verfahren zum zeitabhängigen Navigieren eines Kraftfahrzeugs anzugeben, bei dem ausgeschlossen ist, dass ein im weiteren Verlauf der Fahrtroute zu befahrender Streckenabschnitt zu diesem Zeitpunkt nicht befahrbar ist sowie ein entsprechendes Navigationssystem zu schaffen.

Diese Aufgabe wird jeweils durch die in den Ansprüchen 1 und 8 angegebenen Merkmale gelöst.

Der Kerngedanke der Erfindung besteht darin, dass bei der Ausarbeitung einer Fahrtroute durch das Navigationssystem außer den im Datenspeicher abgelegten statischen Informationen über das Strecken- und Wegenetz auch zeitabhängige Einflussgrößen berücksichtigt werden. Das bedeutet, dass die Fahrtroute von der Routenberechnungseinheit daraufhin überprüft wird, ob ein im Verlauf dieser Fahrtroute zu befahrender Streckenabschnitt zu dem erwarteten Zeitpunkt, an dem das Fahrzeug diesen Streckenabschnitt erreicht, auch tatsächlich frei befahren werden kann. Hierfür wird von der Routenberechnungseinheit eine durchschnittliche Fahrtgeschwindigkeit angenommen, die je nach Streckenabschnitt bzw. Art der Fahrbahn abschnittsweise auch unterschiedlich sein kann beziehungsweise von einem Nutzer seinen Wünschen entsprechend vorgegeben werden kann. Sind in der Route eine oder mehrere Zeitabhängigkeiten enthalten, so bestimmt die Routenberechnung für alle Streckenabschnitte, die vor den mit Zeitabhängigkeiten behafteten liegen, Zeitpunkte oder Zeiträume, in denen dieses passiert werden müssen, um die Zeitbedingungen einhalten zu können. Ist in der berechneten Fahrtroute beispielsweise eine Brücke über einem Wasserweg enthalten, die mehrmals täglich für die Passage von Schiffen geöffnet wird, berechnet die Routenberechnungseinheit die vorrausichtlich bis zum Erreichen der Brücke verstreichende Zeit und stellt fest, ob zu diesem Zeitpunkt die Brücke auch tatsächlich für den Verkehr freigegeben ist. Selbstverständlich können hierbei gewisse Abweichungen von der zu erwartenden Fahrtzeit berücksichtigt werden. Stellt die Routenberechnungseinheit jedoch fest, dass zu dem erwarteten Zeitpunkt die Brücke oder eine sonstige Durchfahrt gesperrt ist, wird dem Nutzer (wenn möglich) schnellere oder ggf. langsamere Fahrweise empfohlen, um vor bzw. nach der gesperrten Zeit einzutreffen oder es wird auf Anforderung des Nutzers oder automatisch eine Neuberechnung der Route veranlasst, die sofern vorhanden, eine Alternativroute bestimmt. In gleicher Weise können Abfahrtszeiten von Fähren oder Autoverladezügen, die erreicht werden sollen, berücksichtigt werden. Weiterhin wird während der Fahrt selbst die aktuelle Position mit der jeweils vorausberechneten Position zu diesem Zeitpunkt verglichen, um zu überprüfen, ob der Zeitplan mit den von der Routenberechnungseinheit zugrunde gelegten Fahrtzeiten übereinstimmt. Sobald ein Grenzwert für die Abweichung von diesem Zeitplan überschritten wird, so dass ein späterer Streckenabschnitt zu dem Zeitpunkt, an dem er tatsächlich erreicht wird, nicht befahrbar ist, wird eine neue Fahrtroute ermittelt und an den Nutzer ausgegeben. Dies kann mit der Ausgabe eines entsprechenden optischen und/oder akustischen Signals z. B. durch Ausgabe einer Sprachmitteilung "die Fahrtroute musste geändert werden" hervorgehoben werden.

Der Vorteil der Erfindung besteht darin, dass die Fahrt zum Zielort ohne Unterbrechungen durch zeitweilige Verkehrssperrungen oder Durchfahrtsverbote durchgeführt werden kann und insgesamt eine Zeitersparnis beim Erreichen des Zielorts erreicht wird.

Vorteilhafte Ausgestaltungen der Erfindung sind jeweils in den Unteransprüchen gekennzeichnet.

Gemäß der im Anspruch 2 gekennzeichneten Ausgestaltung wird dem Fahrer vom Navigationssystem bei Überschreiten des Grenzwerts für eine Abweichung von dem vorausberechneten Zeitplan eine schnellere oder langsamere Fahrweise vorgeschlagen. Wird zu Beginn der Fahrt die Fahrtroute zu langsam befahren, so dass ein bestimmter Streckenabschnitt nicht zu einer vorausberechneten Zeit erreicht werden kann, wird dies vom Navigationssystem festgestellt und der Nutzer darauf hingewiesen, dass er schneller fahren sollte. Ist dies z. B. aufgrund des Verkehrsaufkommens oder Geschwindigkeitsbegrenzungen nicht möglich kann der Nutzer diese Mitteilung beispielsweise durch Betätigen einer Taste am Navigationssystem, das in das Armaturenbrett eines Kraftfahrzeugs eingebaut ist, quittieren und gegebenenfalls die Ermittlung einer alternativen Fahrtroute veranlassen. In gleicher Weise kann der Nutzer auf eine zu schnelle Fahrweise hingewiesen werden, bei der er den gesperrten Streckenabschnitt zu früh erreichen würde und dort warten müsste. Hierbei ist es auch möglich, dass die Fahrt beispielsweise für eine Erfrischungspause unterbrochen wird, um wieder zum alten Zeitplan zurückzukehren. Eine derartige Unterbrechung kann ebenfalls in das Navigationssystem eingegeben werden.

Um auch fahrerbezogenen Einflussgrößen Rechnung tragen zu können und/oder um unerwartet geänderte Einflussgrößen mit einbeziehen zu können, wird gemäß Anspruch 4 vorgeschlagen, dass bei unmittelbarem Bevorstehen eines zeitabhängig nicht erlaubten Fahrmanövers automatisch eine Neuberechnung der Route durchgeführt wird. Sollte z.B. der Nutzer den Empfehlungen, seine Fahrweise zu beschleunigen oder zu verlangsamen nicht befolgt haben oder sollte eine kurzfristige Änderungen von Zeitbedingungen empfangen worden sein, kann es vorkommen, dass der Fahrer am nächsten Abzweigpunkt auf der Route aufgefordert werden müsste, eine zu dieser Zeit nicht befahrbare Strecke zu benutzten oder zu warten, bis diese wieder benutzbar wird. In diesen Fällen versucht das Navigationssystem durch Neuberechnung automatisch eine Alternativroute zu finden.

Da sich die zeitabhängigen Einflussgrößen häufig ändern können diese entsprechend der im Anspruch 5 angegebenen Ausgestaltung manuell in das Navigationssystem eingegeben werden. Dies kann mit einer Tastatur oder durch eine menügesteuerte Eingabe auf einem Display erfolgen. Diese zeitabhängigen Einflussgrößen können u. a. die Dauer einer Sperrung eines Streckenabschnitts beispielsweise aufgrund einer Großveranstaltung oder dergleichen sein. Die zeitabhängigen Einflussgrößen können auch täglich oder wöchentlich wiederkehrende Einflussgrößen sein, wie z. B. ein täglicher Stau im Berufsverkehr an einem Autobahnknoten. Auch die bekannten Abfahrtszeiten eines Autoverladezugs können in das Navigationssystem eingegeben werden. Feststehende zeitabhängige Einflussgrößen wie u. a. ein nächtliches Durchfahrtsverbot für eine Straße können bereits im Datenspeicher hinterlegt sein.

Um kurzfristig auftretende zeitabhängige Einflussgrößen bei der Ermittlung einer neuen Fahrtroute berücksichtigen zu können, können die zeitabhängigen Einflussgrößen wie im Anspruch 6 vorgeschlagen während der Fahrt vom Navigationssystem empfangen werden. Beispielsweise können Staumeldungen, die in den Verkehrsnachrichten mitgeteilt werden, bei der Ermittlung einer neuen Fahrtroute einfließen, um den Stau zu umfahren. Es versteht sich, dass diese Staumeldungen in bestimmter Weise verschlüsselt sind und zusammen mit den gesprochenen Verkehrsnachrichten von Rundfunksendern ausgestrahlt werden, wobei das Navigationssystem dazu in der Lage ist, die kodierten Nachrichten zu entschlüsseln.

Zur Anpassung an Änderungen der zeitabhängigen Einflussgrößen werden deren Änderungen bei der Ermittlung der Fahrtroute berücksichtigt wie in Anspruch 7 angegeben. Beispielsweise sollte bei einer ursprünglich ermittelten Fahrtroute ein Autobahnknoten umfahren werden, da zu der erwarteten Zeit, an der der Autobahnknoten erreicht werden würde, üblicherweise dort ein Stau auftritt. Wird nun in den Verkehrsnachrichten mitgeteilt, dass sich der zu erwartende Stau nicht gebildet hat, kann dies von der Routenberechnungseinheit verarbeitet und die Fahrtroute über diesen Autobahnknoten gelegt werden, um schneller ans Ziel zu gelangen.

Zur Durchführung der vorstehend beschriebenen Verfahren dient ein an sich bekanntes Navigationssystem, das insbesondere mit Hilfe eines GPS-Empfängers jeweils seine momentane Position auf der Erdoberfläche ermittelt. Im Navigationssystem ist eine ebenfalls bekannte Routenberechnungseinheit vorgesehen, um eine den Wünschen des Nutzers entsprechende Route vom Ausgangspunkt zu einem vom Nutzer eingegebenen Zielort zu ermitteln. Zusätzlich ist in dem Navigationssystem eine Vergleichseinheit vorhanden, die die aktuelle Position mit einer postulierten Position entsprechend der ermittelten Fahrtroute vergleicht. Sobald die Abweichung von der postulierten Position einen vorzugsweise einstellbaren Grenzwert überschreitet wird von dem Navigationssystem eine alternative Fahrtroute ausgearbeitet. Weiterhin ist das Navigationssystem bzw. die Routenberechnungseinheit derart ausgelegt, dass zeitabhängige Einflussgrößen wie zeitweise Streckensperrungen oder die Abfahrtszeiten von Autoverladezügen berücksichtigbar sind. Hierfür wird entweder in der Routenberechnungseinheit bzw. einer separaten Routenüberwachungseinheit die Fahrtroute daraufhin überprüft, ob bei der vom Nutzer eingegebenen oder angenommenen durchschnittlichen Fahrtgeschwindigkeit jeder Streckenabschnitt zu dem Zeitpunkt an dem er erreicht wird tatsächlich für die Durchfahrt frei ist. Ist dies nicht der Fall, wird eine alternative Fahrtroute ermittelt. Des weiteren ist das Navigationssystem hard- und/oder softwaremäßig derart ausgelegt, dass auch die weiteren Ausgestaltungen des Verfahrens durchführbar sind. Im Vorstehenden wurde das Navigationssystem bzw. das Verfahren zum Navigieren eines Kraftfahrzeugs stets im Zusammenhang mit einem Kraftfahrzeug beschrieben. Es ist für den Fachmann jedoch ersichtlich, dass das Navigationssystem auch auf anderen Gebieten einsetzbar ist. So kann ein tragbares Navigationssystem von einem Nutzer, der zu Fuß unterwegs ist, mitgeführt werden.

### Kurzbeschreibung der Zeichnungen

Eine Ausführungsformen der Erfindung wird nachstehend anhand der Zeichnung näher erläutert. Es zeigt:

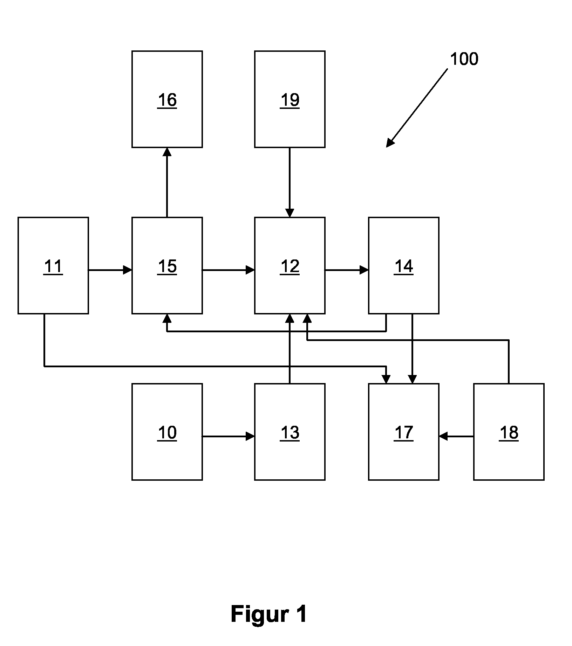

- Fig. 1:: ein Blockschaltbild eines Navigationssystems.

### Bester Weg zur Ausführung der Erfindung

Aus der schematischen Darstellung in Figur 1 ist ein Navigationssystem 100 ersichtlich. Die Pfeile deuten an, welche funktionellen Komponenten untereinander in Verbindung stehen. Es besteht im Wesentlichen aus einer Positionsbestimmungseinheit 11, die die Position beispielsweise mit Hilfe des GPS-Systems oder des noch zu installierenden Galileo-Systems bestimmt. An einer Eingabeeinheit 19 kann der Nutzer seinen gewünschten Zielort und gegebenenfalls zusätzliche Parameter wie Streckenwahl oder zu erwartende durchschnittliche Fahrtgeschwindigkeit eingeben. Daraufhin wird in einer Routenberechnungseinheit 12 auf Grundlage der in einem Datenspeicher 13 beispielsweise einer CD-Rom oder einer DVD abgelegten Informationen über das Strecken- und Wegenetz eine den Wünschen des Nutzers entsprechende Fahrtroute zum Zielort ermittelt und in einem Routenspeicher 14 gespeichert. Auf der Fahrtroute können zeitabhängige Einflussgrößen wie z. B. eine sich zu bestimmten Tageszeiten öffnende Brücke das Befahren dieses Streckenabschnitts zu bestimmten Zeiten unmöglich machen. Dies wird von der Routenberechnungseinheit 12 festgestellt und in diesem Fall eine alternative Fahrtroute vorgeschlagen. Der Nutzer des Navigationssystems 100 wird entlang der zu befahrenden Fahrtroute von einer Zielführungseinheit 15 geführt, die die tatsächliche Position mit der im Routenspeicher 14 gespeicherten Fahrtroute sowie den Informationen über das Strecken- und Wegenetz im Datenspeicher 13 vergleicht und entsprechende Richtungshinweise optisch und/oder akustisch über eine Ausgabeeinheit 16 ausgibt.

Die momentane Position wird von einer Überwachungseinheit 17 vorzugsweise ständig zumindest aber wenn auf der ermittelten Fahrtroute zeitabhängige Einflussgrößen auftreten mit der bei der angenommenen Durchschnittsgeschwindigkeit jeweils vorausberechneten angenommenen Position verglichen. Hierfür kann im Navigationssystem ein interner Zeitgeber 18 vorgesehen sein oder es wird zur Erfassung der jeweils verstrichenen Zeiten das Zeitsignal des GPS-Systems verwendet. Sobald die Überwachungseinheit 17 feststellt, dass die Abweichung von der vorausberechneten Fahrtroute einen vorzugsweise einstellbaren Grenzwert überschreitet, kann der Nutzer beispielsweise über die Ausgabeeinheit 16 darüber informiert und zu schnellerer oder langsamerer Fahrweise angeregt werden. Alternativ kann entweder selbsttätig oder auf Anforderung des Nutzers beispielsweise durch Betätigung eines entsprechenden Bedienelements am Navigationssystem 100 eine alternative Fahrtroute ermittelt werden, die berücksichtigt, dass zu dem vorausberechneten Zeitpunkt, an dem beispielsweise eine Brücke erreicht werden würde, diese geöffnet ist. Dementsprechend wird diese Brücke in der alternativen Fahrtroute umfahren. Vorzugsweise werden von einem Empfänger 10 Änderungen der äußeren Umstände wie beispielsweise ein kurzfristig auftretender Verkehrsstau empfangen und entweder unmittelbar an die Routenberechnungseinheit 12 weitergeleitet oder zusätzlich im Datenspeicher 13 abgespeichert.

## Patentansprüche

1. Verfahren zum Navigieren eines Kraftfahrzeuges mit einem Navigationssystem (100), das Routen zu Zielen berechnet, die der Nutzer des Kraftfahrzeuges vorgeben kann, wobei zeitabhängige Einflussgrößen, die die Befahrbarkeit der Route betreffen, berücksichtigt werden, **dadurch gekennzeichnet, dass** zu Positionen entlang der Route Zeiten oder Zeiträume gespeichert werden, zu denen das Fahrzeug diese Position passieren muss, um den Zeitabhängigkeiten zu entsprechen und dass während der Fahrt Überprüfungen erfolgen, ob die gespeicherten Zeiten bzw. Zeiträume eingehalten werden.

2. Verfahren nach Anspruch 1, **dadurch gekennzeichnet, dass** bei Überschreiten des Grenzwerts einer zeitlichen Abweichung eine schnellere oder langsamere Fahrweise vorgeschlagen wird.

3. Verfahren nach Anspruch 1 oder 2, **dadurch gekennzeichnet, dass** bei Überschreiten eines zeitlichen Grenzwertes automatisch eine Neuberechnung der Route durchgeführt wird.

4. Verfahren nach Anspruch 1, 2 oder 3, **dadurch gekennzeichnet, dass** bei unmittelbarem Bevorstehen eines zeitabhängig nicht erlaubten Fahrmanövers automatisch eine Neuberechnung der Route durchgeführt wird.

5. Verfahren nach einem der Ansprüche 1 bis 4, **dadurch gekennzeichnet, dass** die zeitabhängigen Einflussgrößen manuell in das Navigationssystem eingegeben werden.

6. Verfahren nach einem der Ansprüche 1 bis 5, **dadurch gekennzeichnet, dass** die zeitabhängigen Einflussgrößen während der Fahrt vom Navigationssystem empfangen werden.

7. Verfahren nach einem der Ansprüche 1 bis 6, **dadurch gekennzeichnet, dass** Änderungen der zeitabhängigen Einflussgrößen bei der Ermittlung der Fahrtroute berücksichtigt werden.

8. Navigationssystem (100), insbesondere zur Durchführung des Verfahrens nach einem der Ansprüche 1 bis 5, mit einer Routenberechnungseinheit (12) zur Ermittlung einer Fahrtroute von einem Ausgangsort zu einem Zielort und einer Überwachungseinheit (17), die den Zeitpunkt an der aktuellen Position mit Zeitpunkten oder Zeiträumen vergleicht, die bei der Berechnung der Route zur Einhaltung von Zeitbedingungen für die jeweiligen Positionen ermittelt wurden.

9. Navigationssystem nach Anspruch 8, **dadurch gekennzeichnet, dass** eine Aufforderung zu einer schnelleren oder langsameren Fahrweise über eine Ausgabeeinheit (16) ausgebbar ist.

10. Navigationssystem nach Anspruch 8 oder 9, **dadurch gekennzeichnet, dass** zeitabhängige Einflussgrößen an einer Eingabeeinheit (19) in das Navigationssystem eingebbar sind.

11. Navigationssystem nach einem der Ansprüche 8 bis 10, **dadurch gekennzeichnet, dass** zeitabhängige Einflussgrößen mit einem Empfänger (10) vom Navigationssystem empfangbar sind.

12. Navigationssystem nach einem der Ansprüche8 bis 11 **dadurch gekennzeichnet, dass** von der Routenberechnungseinheit (12) Änderungen der zeitabhängigen Einflussgrößen bei der Ermittlung der Fahrtroute berücksichtigbar sind.
